# EUROPÄISCHE PATENTSCHRIFT

(11) **EP 3 392 019 B1**
(45) Veröffentlichungstag und Bekanntmachung des Hinweises auf die Patenterteilung: **29.04.2020**
(21) Anmeldenummer: 18176111.5
(22) Anmeldetag: 31.03.2016
(51) Int. Cl.: B29C 64/214, B29C 64/35, B33Y 10/00, B33Y 30/00

(54) **VORRICHTUNG ZUM HERSTELLEN VON DREIDIMENSIONALEN OBJEKTEN DURCH AUFEINANDER-FOLGENDES VERFESTIGEN VON SCHICHTEN SOWIE EIN ZUGEHÖRIGES VERFAHREN**
DEVICE AND AN ASSOCIATED METHOD FOR PRODUCING THREE-DIMENSIONAL OBJECTS BY SOLIDIFYING LAYERS ONE AFTER THE OTHER
DISPOSITIF DE FABRICATION D'OBJETS TRIDIMENSIONNELS PAR DURCISSEMENT SUCCESSIF DE COUCHES AINSI QU'UN PROCÉDÉ ASSOCIÉ

(30) Priorität: 07.05.2015 DE 102015107178
(43) Veröffentlichungstag der Anmeldung: 24.10.2018
(62) Teilanmeldung aus: 16713437.8
(73) Patentinhaber: CL Schutzrechtsverwaltungs GmbH, 96215 Lichtenfels (DE)
(72) Erfinder: Herzog, Frank, 96215 Lichtenfels (DE); Dr. Bechmann, Florian, 96215 Lichtenfels (DE); Zeulner, Fabian, 96215 Lichtenfels (DE); LIPPERT, Markus, 96215 Lichtenfels (DE); Stammberger, Jens, 96472 Rödental (DE); Diller, Christian, 96215 Lichtenfels (DE)
(74) Vertreter: Hafner & Kohl Patent- und Rechtsanwälte Partnerschaft mbB

(56) Entgegenhaltungen:
- WO-A1-2014/191200
- DE-A1-102007 040 755

## Beschreibung

Die Erfindung betrifft eine Vorrichtung zum Herstellen von dreidimensionalen Objekten durch aufeinanderfolgendes Verfestigen von Schichten eines mittels Strahlung verfestigbaren Aufbaumaterials an den dem jeweiligen Querschnitt des Objektes entsprechenden Stellen, mit den weiteren Merkmalen des Oberbegriffes des Patentanspruches 1 sowie ein zugehöriges Verfahren.

Eine Vorrichtung der vorstehend bezeichneten Art weist zunächst ein Gehäuse auf, in dem eine Prozesskammer untergebracht ist. Unter der Ebene eines Prozesskammerbodens ist ein Baubehälter untergebracht, auf der Aufbaumaterial und ein Teilobjekt oder Objekt beim Herstellungsvorgang ruht. Darüber hinaus ist eine Aufbringvorrichtung vorgesehen, mit der Schichten des Aufbaumaterials auf die Tragevorrichtung vom Baubehälter oder eine zuvor gebildete Schicht aufgetragen werden. Eine Dosiereinrichtung dient dazu, Aufbaumaterial dem Beschichterelement der Aufbringvorrichtung zuzuführen. Das Beschichterelement fährt insbesondere linear über die Oberfläche des durch den Baubehälter definierten Baufeldes und verteilt das Aufbaumaterial als sehr dünne Schicht, die dann durch Bestrahlung mit einem fokussierten Laserstrahl an oder aufgeschmolzen wird und nach Abkühlung zur Bildung des Objektes erstarrt. Eine derartige Vorrichtung ist beispielsweise aus DE 10 2006 056 422.7 bekannt.

Die bekannten Vorrichtungen sind insofern nachteilig, als die durch den Beschichtungsvorgang erforderliche Belichtungspause einen relativ langen Zeitraum einnimmt.

DE 10 2007 040 755 A1 offenbart gemäß den Oberbegriffen der Ansprüche 1 und 14 eine Lasersintervorrichtung zum Herstellen von dreidimensionalen Objekten durch Verfestigen von aufeinanderfolgenden Schichten eines pulverförmigen Materials an den dem jeweiligen Querschnitt des Objekts entsprechenden Stellen mittels Laserstrahlung, mit einem Laser, einem Bauraum mit einer Trägereinrichtung zum Tragen des Objektes, und einem Beschichter zum Auftragen von pulverförmigen Schichten auf der Trägereinrichtung.

WO 2014/191200 A1 offenbart eine Anordnung mit einer Prozesskammer, einer in der Prozesskammer befindlichen Beschichtungsplattform und einer Rakeleinrichtung mit einem in der Prozesskammer befindlichen Rakelelement zum Aufrakeln eines Pulvers.

Der Erfindung liegt die Aufgabe zugrunde, eine Vorrichtung und ein zugehöriges Verfahren derart auszubilden, dass der gesamte Bauvorgang kürzer gestaltet werden kann. Dies wird durch eine Vorrichtung gemäß Anspruch 1 gelöst.

Als Kern der Erfindung wird es damit angesehen, Maßnahmen zu treffen, die eine sofortige Belichtungsaufnahme über vorzugsweise den gesamten Belichtungsbereich unmittelbar nach Ende eines Beschichtungsvorganges vorzunehmen oder zu starten. Dem Grunde nach kann bereits unmittelbar hinter dem während eines Beschichtungsvorganges in Auftragsrichtung laufenden Beschichterelement den Belichtungsvorgang zu beginnen, da aber Belichtungsvorgänge meist verteilt über die Baufläche oder große Abschnitte der Baufläche im Wege einer sogenannten "Island-Beschichtung" erfolgen, d. h. kleine Abschnitte belichtet werden, die zum Teil weit voneinander entfernt sind, um thermische Spannungen in einer Bauteilschicht zu vermeiden, ist es zweckdienlich, den Beschichter so zurückzuführen, dass vorzugsweise das gesamte Baufeld frei zur Belichtung zur Verfügung steht. Mit anderen Worten umfasst die Lehre des Patentanspruches 1 alle Rückführungsarten, bei denen das Beschichterelement oder weitere Elemente der Auftragsvorrichtung so geführt wird, dass ein Laserstrahl ungehindert durch ein den Strahl kreuzendes Beschichtungselement oder ein sonstiges Element der Auftragsvorrichtung freien Zugriff auf die Baufläche hat.

Die Ausweichbewegung umfasst vorteilhafter Weise eine Änderung der

Raumlage des Beschichters bezogen auf die Raumlage des Beschichters beim Beschichtungsvorgang. Liegt beispielsweise der Beschichter oder das Beschichtungselement horizontal über der zu beschichtenden Fläche, dann ist mit einem Hochklappen, einem Wegschwenken, einem Herausdrehen aus dem Baufeld und dgl. eine Raumlagenänderung verbunden, die sich vorteilhaft auf die Beschleunigung des gesamten Bauprozesses auswirkt. Bei der Beschichterelementrückführung kann über einen oder mehrere Scanner eine gezielt und vollumfängliche Belichtung des gesamten Baufeldes begonnen werden.

Es ist auch möglich, das Beschichterelement im Wege der Ausweichbewegung seitlich linear aus dem Baufeld herauszufahren und seitlich vom Baufeld zurückzufahren. Dann kann eine ebene Lage des Beschichterelementes beibehalten werden, es wird nur seitlich vom Baufeld relativ viel Platz für die Rückführung beansprucht. Die Lineare Verschiebebewegung kann vorteilhafter Weise rechtwinkelig zur Auftragsrichtung verlängert, aber auch schräg angeordnet sein.

Zusätzlich zur Ausweichbewegung ist es für die Beschleunigung des Bauvorganges vorteilhaft, wenn bei der Ausweichbewegungen das Beschichterelement mit einer erhöhten Geschwindigkeit verglichen mit einer Schichtauftragsgeschwindigkeit bewegt wird. Dadurch wird der Rückführungsvorgang des Beschichterelementes verkürzt. Arbeitet dazu die Belichtungseinrichtung z. B. mit mehreren Scannern über dem Baufeld, dann sind die Belichtungsphasen und Beschichtungsphasen verkürzt.
Das Beschichterelement kann einseitig um wenigstens eine Achse verschwenkbar gelagert sein. Die Verschwenkung kann horizontal erfolgen oder eine Hochschwenkbewegung umfassen. Es ist auch möglich, am Ende eines Auftragsvorgangs das Beschichterelement gleichsam in Richtung der Auftragsbewegung über die Baufläche hinaus rotierend zu verschwenken rotierend um das Baufeld herum in die Ausgangslage zurückzuschwenken, sodass bei einem Auftragsvorgang zusammen mit dem Rückführungsvorgang das Beschichterelement wie ein Zeiger über einem Zifferblatt um 360° verschwenkt wird.

Grundsätzlich ist es auch möglich, das Beschichterelement zur Rückführung in die Beschichtungsausgangslage am Ende des Beschichtungsvorganges von der Schicht der Bauebene abzuheben und oberhalb einer Scanneranordnung der Belichtungsvorrichtung zurück in die Ausgangslage zu führen. Die Rückführung kann zunächst eine Vertikalbewegung umfassen, sodann eine Horizontalbewegung über die Scanneranordnung hinweg in Richtung der Beschichtungsausgangslage und dann eine nach unten gerichtete Absenkbewegung. Genauso gut ist es aber auch möglich, den Beschichter unter Beibehaltung einer Parallellage zu seiner Beschichterlängsrichtung oder unter Hintzufügung von Beschichterelement-Schwenkbewegungen auf einer Bogenlinie über die Scanneranordnung hinweg zur Ausgangslage zurückzubringen.

Besonders vorteilhaft ist es, wenn der in der Ausweichbewegung befindliche Beschichter an einem Beschichterwechsler vorbeifährt und dort eine alte Beschichterklinge abgezogen und eine neue Beschichterklinge aufgeschoben wird. Dies kann vollautomatisch geschehen. Es können Beschichterklingen und Bürsten unterschiedlicher Art aufgesetzt werden, je nachdem was der Bauvorgang erfordert. Es liegt auch im Rahmen der Erfindung, anstelle eines Beschichters oder zusätzlich zu einem Beschichterelement ein Sensorelement an einen Träger der Auftragseinrichtung anzukoppeln und z. B. Messungen über dem Baufeld, wie Temperaturmessungen, eine Strahlkaustikmessung, Schichtoberflächenqualitätsmessungen und dgl. durchzuführen.

Die Erfindung ist anhand von Ausführungsbeispielen näher erläutert. Diese zeigen:
- Fig. 1: eine schematische Darstellung einer Vorrichtung zur Herstellung von dreidimensionalen Objekten, in der der Scannerstrahlraumbereich zwischen Scanner und Baufeld angedeutet ist;
- Fig. 2: eine Draufsicht auf einen Prozesskammerboden mit Baufeld, Dosierkammeröffnung und Überlauföffnung; (Stand der Technik)
- Fig. 3: eine schematische Darstellung von Beschichterelementbewegungen beim Auftrag einer Schicht mit einer erfindungsgemäßen Ausweichbewegung;
- Fig. 4: eine Darstellung ähnlich Fig. 3, bei der die Beschichterelement-bewegungen ohne die Baufeldöffnungen dargestellt sind;
- Fig. 5: eine schematische Darstellung einer Beschichterelementanordnung, die um eine seitliche Schwenkachse hochschwenkbar ist;
- Fig. 6: eine Beschichterelementdarstellung beim Schichtauftrag und bei einer Ausweichbewegung, bei welcher das Beschichterelement außerhalb der Bauebene horizontal oder mit einer zusätzlichen Hochklappkomponente um 360° verschwenkt wird;
- Fig. 7: eine schematische Darstellung einer rechteckigen oder bogenförmigen Führung eines Beschichterelementes über eine Scanneranordnung hinweg.

Zunächst wird auf Zeichnungsfigur 1 Bezug genommen, um die erfindungsgemäße Vorrichtung allgemein vorzustellen.

Dort ist eine Vorrichtung 1 zum Herstellen von dreidimensionalen Objekten 14 durch aufeinanderfolgendes Verfestigen von Schichten eines mittels Strahlung verfestigbaren Aufbaumaterials 9 an den dem jeweiligen Querschnitt des Objektes entsprechenden Stellen schematisch dargestellt. Die Vorrichtung 1 weist ein Gehäuse 2 auf, das eine Prozesskammer 3 mit einem Prozesskammerboden 4 umschließt. Unter der Ebene des Prozesskammerbodens 4 sind eine Dosiereinrichtung 5 zum Zustellen von Aufbaumaterial 9 und ein Baubehälter 6 mit einer höhenverstellbaren Tragevorrichtung 7 angeordnet. Benachbart zum Baubehälter 6 ist unter der Ebene des Prozesskammerbodens 4 ein Überlaufbehälter 8 angeordnet. Die Dosiereinrichtung 5, der Baubehälter 6 und der Überlaufbehälter 8 sind oben offen, d.h. der Prozesskammerboden 4 weist über der Dosiereinrichtung 5, dem Baubehälter 6 und dem Überlaufbehälter 8 Öffnungen auf.

Die Öffnung des Baubehälters 6 ist mit Bezugszeichen 13 versehen, die Überlauföffnung des Überlaufbehälters 8 trägt das Bezugszeichen 15. Ein Beschichtungselement 11 einer Auftragsvorrichtung 12 verteilt das Aufbaumaterial 9 schichtweise auf der Baufläche.

Um das Aufbaumaterial 9, das auf die Tragevorrichtung 7 oder eine bereits verfestigte Schicht des Objektes 14 aufgetragen ist, zu verfestigen, ist eine Bestrahlungsvorrichtung vorgesehen, die einen Laser 16 und einen Scanner 17 umfasst. Beim dargestellten Ausführungsbeispiel ist die Bestrahlungsvorrichtung über der Prozesskammer 3 angeordnet, der von dem Scanner 17 kommende Laserstrahl 19 durchsetzt ein Fenster 18 in der Prozesskammerdecke.

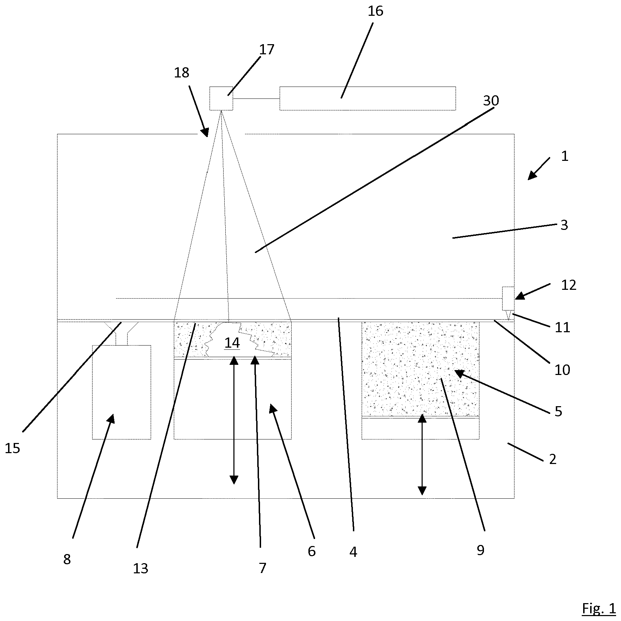

Über der Öffnung 13 des Baubehälters 6, die gleichsam die Baufläche definiert, ist zwischen dem Scanner 17 und der Öffnung 13 der Scannerstrahl-Raumbereich 30 angedeutet, das ist der Raumbereich, den ein Laserstrahl 19 bei maximaler Ablenkung bis zu den Kanten der Öffnung 13 einnimmt. Beim dargestellten Ausführungsbeispiel gemäß Fig. 1 ist nur ein Scanner 17 vorgesehen, d. h. der Scannerstrahl-Raumbereich 30 hat die Form einer spitzen Pyramide. Sind allerdings mehrere Scanner 17 vorgesehen, dann kann der Scannerstrahl-Raumbereich 30 auch eine andere Form haben, z. B. die Form eines Pyramidenstumpfes.

Nachfolgend wird auf Zeichnungsfigur 2 Bezug genommen. Dort ist in Draufsicht ein Prozesskammerboden 4 dargestellt, bei welchem ein Laufwagen einer herkömmlichen Aufbringvorrichtung 12 beidseitig auf Laufschienen 10 geführt ist, d. h. die Vor- und Rückbewegung bei dem Beschichtungsvorgang bzw. einem Rückführvorgang erfolgt immer auf der gleichen Linie. Das Beschichtungselement 11 und der Laufwagen kreuzen damit zwangsweise den über dem Baubehälter 6 liegenden Scannerstrahl-Raumbereich 30 bei der Rückführung des Beschichtungselementes 11 in eine Beschichtungsausgangslage.

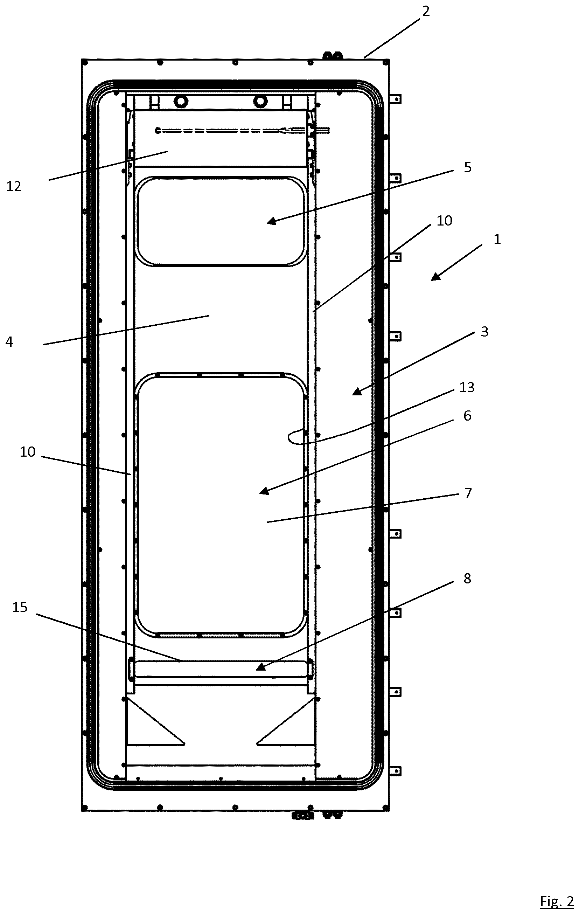

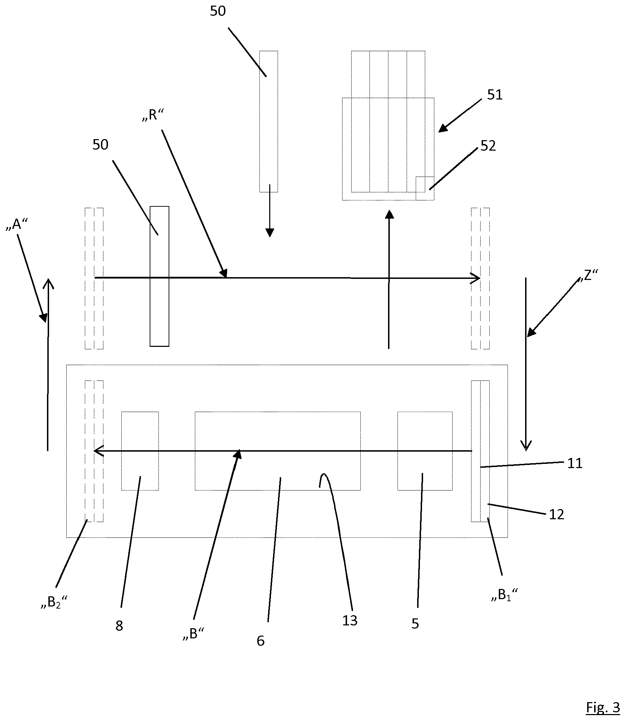

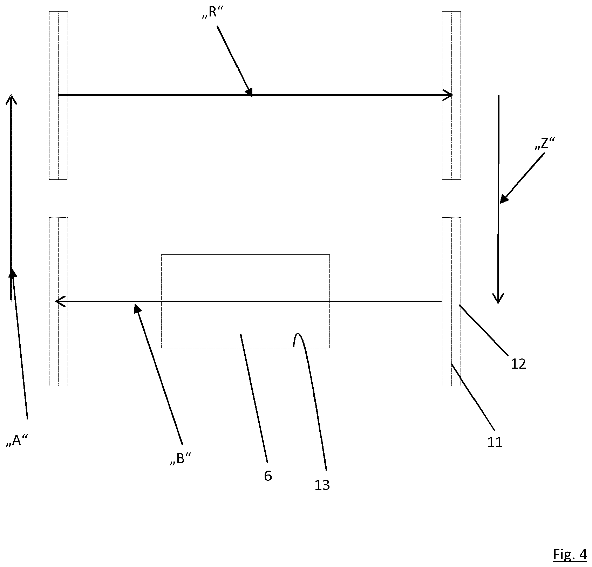

In Zeichnungsfigur 3 ist ähnlich Fig. 2 noch einmal der Prozesskammerboden 4 mit den Öffnungen der Dosiereinrichtung 5, des Baubehälters 6 und des Überlaufbehälters 8 dargestellt. Die Aufbringvorrichtung 12 mit dem darunter angeordneten Beschichterelement 11 ist in Pfeilrichtung über den Prozesskammerboden 4 geführt. Die Führung ist allerdings so vorgenommen, dass infolge einer Ausweichbewegung der gesamten Beschichteranordnung 12 der Scannerstrahl-Raumbereich 30, der über der Baukammer 6 liegt, frei bleibt. In Figur 3 ist angedeutet, dass die Auftragsvorrichtung 12 nach Beendigung des Beschichtungsvorganges B eine Ausweichbewegung A durchführt, daran schließt sich die Rückführbewegung R an und dann eine weitere Bewegung Z zum Zurückführen der Auftragsvorrichtung 12 und des Beschichterelementes 11 in die Ausgangsposition. Die Bewegungen Beschichten = B, Ausweichbewegung = A, Rückführbewegung = R und Zurückführen in die Ausgangslage = Z sind in Figur 4 noch einmal dargestellt.

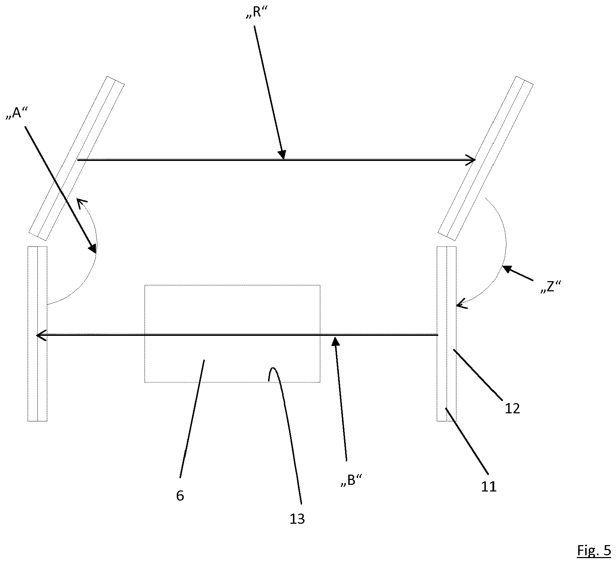

In Figur 5 ist ähnlich Figur 4 in Draufsicht nur die Baukammer 6 angedeutet. Die Auftragsvorrichtung 12 oder zumindest das Beschichtungselement 11 wird im Sinne einer Auftragsbewegung A hochgeschwenkt und vollzieht in hochgeschwenkter Stellung die Rückführbewegung R und kann dann im Sinne einer Zustellbewegung Z wieder in eine horizontale Stellung heruntergeklappt werden. Auch mit einer derartigen Ausweichbewegungsanordnung bleibt der Raumbereich der Scannerstrahl-Raumbereich 30 unbeeinflusst.

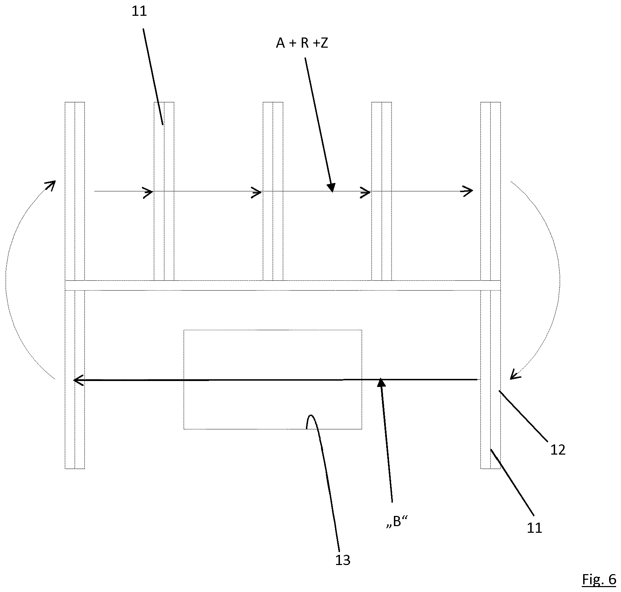

In Figur 6 ist eine weitere Möglichkeit gezeigt, das Beschichtungselement 11 ohne Störung des Scannerstrahl-Raumbereiches 30 zurückzuführen. Das Beschichtungselement 11 wird auf einem Laufwagen der Auftragsvorrichtung 12 z. B. auf einer einseitigen Schiene geführt. Nach Beendigung des Beschichtungsvorganges B wird im Sinne einer kombinierten Ausweich-Rückführ und Zurückführbewegung A, R, Z das Beschichtungselement 11 quasi wie ein Zeiger um 360° horizontal oder mit einer überlagernden Hochschwenkbewegung zurückgeführt in die Ausgangslage B1.

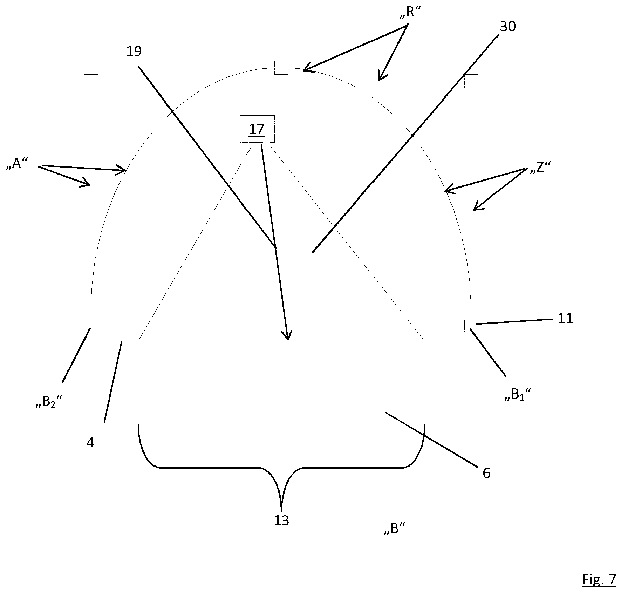

In Fig. 7 ist das Beschichtungselement 11 von der Seite gezeigt. Es wird beim Beschichtungsvorgang B von der Ausgangslage B1 zur Beschichtungsendlage B2 geführt und dann entweder rechteckig zunächst nach oben geführt zurück in die Ausgangslage des Beschichterelementes 11 (A,R,Z).

Die Bewegungen A, R und Z sind so gewählt, dass sie oberhalb eines Scanners 17 verlaufen und dadurch den gesamten Scannerstrahl-Raumbereich 30 unbeeinflusst lassen.

In Zeichnungsfigur 3 ist rein schematisch noch eine Reinigungsvorrichtung 50 dargestellt, bei welcher das Beschichterelement 11 bei seiner Rückführung in die Ausgangslage B1 gereinigt werden kann, z. B. abgespült, abgeblasen oder dgl. wird. Da dies entfernt von der Baukammer 6 erfolgt, wird der Bauprozess durch den Reinigungsvorgang nicht negativ beeinflusst.

Ebenfalls in Figur 3 ist ein Beschichterelementwechsler 51 angedeutet, der wie ein Magazin aufgebaut sein kann und eine Mehrzahl von gleichen oder unterschiedlichen Beschichterelementen 11 beinhaltet. Ein Beschichterelementträger kann im Zuge der Rückführung oder Ausweichbewegung mit einem neuen oder unterschiedlichen Beschichterelement 11 im Bereich des Beschichterelementwechslers 51 versehen werden.

Genauso ist es möglich, anstelle eines neuen Beschichterelementes 11 ein Sensorelement 52 zur Kaustikmessung oder dgl. an einem Beschichterelemtträger anzukoppeln, das ebenfalls im Beschichterelementwechsler 51 bereitgehalten werden kann.

### BEZUGSZEICHENLISTE

- 1: Vorrichtung
- 2: Gehäuse
- 3: Prozesskammer
- 4: Prozesskammerboden
- 5: Dosiereinrichtung
- 6: Baubehälter
- 7: Tragevorrichtung
- 8: Überlaufbehälter
- 9: Aufbaumaterial
- 10: Schiene
- 11: Beschichterelement
- 12: Auftragsvorrichtung
- 13: Öffnung v. 6
- 15: Öffnung v. 8
- 16: Laser
- 17: Scanner
- 18: Fenster
- 19: Laserstrahl
- 30: Scannerstrahl-Raumbereich
- 50: Reinigungsvorrichtung
- 51: Beschichterelementwechsler
- 52: Sensorelement

## Patentansprüche

1. Vorrichtung zum Herstellen von dreidimensionalen Objekten durch aufeinanderfolgendes Verfestigen von Schichten eines mittels Strahlung verfestigbaren Aufbaumaterials an dem den jeweiligen Querschnitt des Objektes entsprechenden Stellen, mit
- einem eine Prozesskammer umfassenden Gehäuse,
- einem darin untergebrachten Baubehälter,
- einer Bestrahlungsvorrichtung zum Bestrahlen von Schichten des Aufbaumaterials an den dem jeweiligen Querschnitt des Objektes entsprechenden Stellen,
- einer Aufbringvorrichtung zum Aufbringen der Schichten des Aufbaumaterials auf eine Tragevorrichtung im Baubehälter oder eine zuvor gebildete Schicht,
- einer Dosiereinrichtung zum Zuführen des Aufbaumaterials, wobei die Aufbringvorrichtung ein Beschichterelement umfasst, dass das von der Dosiereinrichtung zugeführte Aufbaumaterial als dünne Schicht in einem Auftragbereich entlang einer linearen Auftragbewegung verteilt, **dadurch gekennzeichnet, dass** das Beschichterelement am Ende eines Beschichtungsvorganges für eine Schicht bei der Rückführung des Beschichterelementes (11) in eine Beschichtungsausgangslage eine Ausweich- Rückführbewegung (A,R,Z) ausführen kann, bei welcher das Beschichterelement (11) den Scannerstrahl-Raumbereich (30) zwischen der Bestrahlungsvorrichtung (17) und einer aufgebrachten Schicht nicht kreuzt, wobei
- das Beschichtungselement (11) einseitig um wenigstens eine Achse verschwenkbar gelagert ist und/oder
- die Ausweich-Rückführbewegung (A,R,Z) eine Schwenkbewegung umfasst, bei der das Beschichterelement (11) außerhalb der zu belichtenden Baufläche rotierend um eine Schwenkachse geführt ist.

2. Vorrichtung nach Anspruch 1, **dadurch gekennzeichnet, dass** die Raumlage des Beschichterelementes (11) im Zuge der Ausweich-Rückführbewegung (A,R,Z) von der Raumlage des Beschichterelementes (11) beim Beschichtungsvorgang (B) abweicht.

3. Vorrichtung nach Anspruch 1 oder 2, **dadurch gekennzeichnet, dass** die Ausweichbewegung (A,R,Z) eine zusätzliche lineare Verschiebebewegung des Beschichterelementes (11) umfasst die entlang einer zur Auftragsrichtung unterschiedlichen Richtung erfolgt.

4. Vorrichtung nach Anspruch 3, **dadurch gekennzeichnet, dass** die Richtung der zusätzlichen Ausweichbewegung (A) rechtwinkelig zur Verschieberichtung beim Schichtauftrag (B) verläuft.

5. Vorrichtung nach Anspruch 1, **dadurch gekennzeichnet, dass** das Beschichterelement (11) bei der Ausweich-Rückführbewegung (A,R,Z) mit einer erhöhten Geschwindigkeit verglichen mit einer SchichtAuftragsgeschwindigkeit (B) bewegt wird.

6. Vorrichtung nach einem der vorhergehenden Ansprüche, **dadurch gekennzeichnet, dass** bei der Ausweichbewegung das Beschichterelement (11) in eine zur Schichtebene der aufgetragenen Pulverschicht nicht parallele Lage überführbar ist.

7. Vorrichtung nach einem der vorhergehenden Ansprüche, **dadurch gekennzeichnet, dass** die Ausweich-Rückführbewegung (A,R,Z) eine Hochschwenkbewegung des Beschichterelementes (11) umfasst.

8. Vorrichtung nach einem der vorhergehenden Ansprüche, **dadurch gekennzeichnet, dass** das Beschichterelement (11) zur Rückführung in die Beschichtungsausgangslage am Ende des Beschichtungsvorganges für eine Schicht von der Bauebene abgehoben und oberhalb einer Scanneranordnung (17) der Belichtungsvorrichtung zurück in die Beschichtungsausgangslage geführt ist.

9. Vorrichtung nach einem der vorhergehenden Ansprüche, **dadurch gekennzeichnet, dass** das Beschichtungselement im Zuge der Ausweich-Rückführbewegung (A,R,Z) von einer Reinigungsvorrichtung (50) beaufschlagt wird.

10. Vorrichtung nach einem der vorhergehenden Ansprüche, **dadurch gekennzeichnet, dass** das Beschichterelement (11) im Zuge der Ausweich-Rückführbewegung (A,R,Z) durch einen Beschichterelementwechsler (51) austauschbar ist.

11. Vorrichtung nach einem der vorhergehenden Ansprüche, **dadurch gekennzeichnet, dass** an einer Halterung oder Führung des Beschichterelementes (11) wenigstens ein Sensorelement zur KaustikMessung der Laserstrahlqualität angeordnet ist, das bei einem Beschichtungsvorgang (B) oder Anstelle eines Beschichtungsvorganges über den zu beschichtenden Bereich eines Baufeldes führbar ist.

12. Vorrichtung nach Anspruch 11, **dadurch gekennzeichnet, dass** die Beschichtungselement-Wechselvorrichtung ein Wechselmagazin umfasst, in dem eine Mehrzahl von gleichen oder unterschiedlichen Beschichtungselementen und/oder eines Sensorelementes (52) zur Kaustikmessung bereitgehalten sind.

13. Vorrichtung nach einem der vorhergehenden Ansprüche, **dadurch gekennzeichnet, dass** das Beschichtungselement (11) bei der Ausweichbewegung (A) aus der zu beschichtenden Fläche des Baufeldes herausgeschwenkt und in dieser herausgeschwenkten Position in die Beschichtungsausgangslage zurückgeführt und in der Beschichtungsausgangslage in die Beschichtungsposition einschwenkbar ist.

14. Verfahren zum Herstellen von dreidimensionalen Objekten durch aufeinanderfolgendes Verfestigen von Schichten eines mittels Strahlung verfestigbaren Aufbaumaterials (9) an den dem jeweiligen Querschnitt des Objektes entsprechenden Stellen, mit folgenden Merkmalen:
- Vorsehen eines Gehäuses (2) mit einem darin angeordneten Baubehälter (6);
- Vorsehen einer Bestrahlungsvorrichtung (16, 17) zum Bestrahlen von Schichten des Aufbaumaterials (9) an dem jeweiligen Querschnitt des Objektes entsprechenden Stellen;
- Vorsehen einer Auftragsvorrichtung (12) zum Aufbringen der Schichten des Aufbaumaterials (9) auf eine Tragevorrichtung (7) im Baubehälter (6) oder eine zuvor gebildete Schicht;
- - Vorsehen einer Dosiereinrichtung (5) zum Zuführen des Aufbaumaterials (9), wobei die Auftragsvorrichtung (12) ein Beschichterelement (11) umfasst, dass das von der Dosiereinrichtung (5) zugeführte Aufbaumaterial (9) als dünne Schicht in einen Auftragbereich entlang einer linearen Auftragbewegung (B) verteilt, **gekennzeichnet durch** Versetzen des Beschichterelementes in eine Ausweichbewegung (A) derart, dass das Beschichterelement bei seiner Rückführung (A,R,Z) in eine Beschichtungsausgangslage (B1) einen Scannerstrahl-Raumbereich (30) zwischen der Bestrahlungsvorrichtung (17) und einer aufgebrachten Schicht nicht kreuzt, wobei
- das Beschichtungselement (11) einseitig um wenigstens eine Achse verschwenkbar gelagert ist und/oder
die Ausweich-Rückführbewegung (A,R,Z) eine Schwenkbewegung umfasst, bei der das Beschichterelement (11) außerhalb der zu belichtenden Baufläche rotierend um eine Schwenkachse geführt ist.

15. Verfahren nach Anspruch 14, **dadurch gekennzeichnet, dass** zur Rückführung in die Beschichtungsausganglage (B1) das Beschichterelement (11) entweder hochgeklappt oder seitlich weggeklappt oder aus dem Scannerstrahl-Raumbereich (30) seitlich herausgefahren oder herausgeschwenkt wird.

## Claims

1. Device for producing three-dimensional objects by successively solidifying layers of a build material that can be solidified using radiation on the positions corresponding to the respective cross-section of the object, comprising
- a housing comprising a process chamber,
- a build container housed therein,
- an irradiation device for irradiating layers of the build material on the positions corresponding to the respective cross-section of the object,
- an application device for applying the layers of the build material onto a support device within the build container or a previously formed layer,
- a metering device for supplying the build material, wherein the application device comprises a coater element which distributes the build material delivered by the metering device as a thin layer in an application area along a linear application movement, **characterized in that** the coater element can perform an evasive return movement (A,R,Z) at the end of a coating process for a layer when returning the coater element (11) to a coating starting position, in which the coater element (11) does not cross the scanner beam spatial area (30) between the irradiation device (17) and an applied layer, wherein
- the coater element (11) is supported pivotably about at least one axis on one side and/or
- the evasive return movement (A, R, Z) includes a pivot movement, in which the coater element (11) is guided rotatably about a pivot axis outside the build surface to be exposed.

2. Device according to claim 1, **characterized in that** the spatial position of the coater element (11) during the evasive return movement (A,R,Z) deviates from the spatial position of the coater element (11) during the coating process (B).

3. Device according to claim 1or 2, **characterized in that** the evasive movement (A,R,Z) comprises an additional linear displacing movement of the coater element (11), which takes place along a direction different from the application direction.

4. Device according to claim 3, **characterized in that** the direction of the additional evasive movement (A) extends at right angles to the displacement direction during layer application (B).

5. Device according to claim 1, **characterized in that** during the evasive return movement (A,R,Z), the coater element (11) is moved with an increased speed compared to a layer application speed (B).

6. Device according to one of the preceding claims, **characterized in that** during the evasive movement, the coater element (11) can be transferred to a position nonparallel to the layer level of the applied powder layer.

7. Device according to one of the preceding claims, **characterized in that** the evasive return movement (A, R, Z) includes an upward-pivot movement of the coater element (11).

8. Device according to one of the preceding claims, **characterized in that** the coater element (11), for the return into the initial coating position at the end of the coating process for a layer, it is lifted off the build plane and returned to the initial coating position above a scanner assembly (17) of the exposure device.

9. Device according to one of the preceding claims, **characterized in that** the coater element is acted upon by a cleaning device (50) in the course of the evasive return movement (A,R,Z).

10. Device according to one of the preceding claims, **characterized in that** in the course of the evasive return movement (A,R,Z), the coater element (11) can be exchanged by means of a coater element changer (51).

11. Device according to one of the preceding claims, **characterized in that** at least one sensor element for caustic measurement of the laser beam quality is arranged on a holder or a guide of the coater element (11), which element, during a coating process (B) or instead of a coating process, can be guided across the area to be coated of a build field.

12. Device according to claim 11, **characterized in that** the coater element changing device includes a changer magazine in which a multitude of identical or different coating elements and/or of a sensor element (52) for caustic measurement are provided.

13. Device according to one of the preceding claims, **characterized in that** the coater element (11) is pivoted out of the area of the build field to be coated during the evasive movement (A), and returned to the initial coating position in this pivoted-out position and, in the coating starting position, is pivotable into the coating position.

14. Method for producing three-dimensional objects by successive solidification of layers of a build material (9) that can be solidified by means of radiation on the positions corresponding to the respective cross-section of the object, comprising the following features:
- providing a housing (2) with a build container (6) arranged therein;
- providing an irradiation device (16, 17) for irradiating layers of the build material (9) on the positions corresponding to the respective cross-section of the object;
- providing an application device (12) for applying the layers of the build material (9) onto a support device (7) within the build container (6) or onto a previously formed layer,
- - providing a metering means (5) for supplying the build material (9), wherein the application device (12) includes a coater element (11) which distributes the build material (9) supplied by the metering device (5) as a thin layer in an application area along a linear application movement (B), **characterized by** bringing the coater element into an evasive movement (A) in such a way that the coater element does not cross a scanner beam spatial area (30) between the irradiation device (17) and an applied layer when being returned (A,R,Z) to an initial coating position, wherein
- the coater element (11) is supported pivotably about at least one axis on one side and/or
the evasive return movement (A, R, Z) includes a pivot movement, in which the coater element (11) is guided rotatably about a pivot axis outside the build surface to be exposed.

15. Method according to claim 14, **characterized in that** for returning into the initial coating position (B1), the coater element (11) is either folded upwards or folded away laterally, or is laterally moved out or pivoted out of the scanning beam spatial region (30).

## Revendications

1. Dispositif de fabrication d'objets tridimensionnels par solidification successive de couches d'un matériau de construction pouvant être solidifié au moyen d'un rayonnement au niveau d'emplacements correspondant à la section transversale respective de l'objet, avec
- un boîtier comprenant une chambre de processus,
- un contenant de construction logé dans celui-ci,
- un dispositif d'irradiation servant à irradier des couches du matériau de construction au niveau des emplacements correspondant à la section transversale respective de l'objet,
- un dispositif d'application servant à appliquer les couches du matériau de construction sur un dispositif de support dans le contenant de construction ou une couche formée au préalable,
- un moyen de dosage servant à amener le matériau de construction, dans lequel le dispositif d'application comprend un élément de revêtement, qui répartit le matériau de construction amené par le système de dosage en tant que couche fine dans une zone d'application le long d'un mouvement d'application linéaire, **caractérisé en ce que** l'élément de revêtement peut exécuter un mouvement de retour-d'évitement (A, R, Z) à a fin d'une opération de revêtement pour une couche lors du retour de l'élément de revêtement (11) dans une position de départ de revêtement, où l'élément de revêtement (11) ne croise pas la zone spatiale du rayon de scanner (30) entre le dispositif d'irradiation (17) et une couche appliquée, dans lequel
- l'élément de revêtement (11) est monté de manière à pouvoir pivoter d'un côté autour d'au moins un axe, et/ou
- le mouvement de retour-d'évitement (A, R, Z) comprend un mouvement pivotant, dans lequel l'élément de revêtement (11) est guidé à l'extérieur de la surface de construction à exposer en rotation autour d'un axe de pivotement.

2. Dispositif selon la revendication 1, **caractérisé en ce que** la position spatiale de l'élément de revêtement (11) diverge, dans le cadre du mouvement de retour-d'évitement (A, R, Z), de la position spatiale de l'élément de revêtement (11) lors de l'opération de revêtement (B).

3. Dispositif selon la revendication 1 ou 2, **caractérisé en ce que** le mouvement d'évitement (A, R, Z) comprend un mouvement par coulissement linéaire supplémentaire de l'élément de revêtement (11), qui a lieu le long d'une direction différente par rapport à la direction d'application.

4. Dispositif selon la revendication 3, **caractérisé en ce que** la direction du mouvement d'évitement (A) supplémentaire s'étend à angle droit par rapport à la direction de coulissement lors de l'application de couche (B).

5. Dispositif selon la revendication 1, **caractérisé en ce que** l'élément de revêtement (11) est déplacé lors du mouvement de retour-d'évitement (A, R, Z) à une vitesse plus élevée en comparaison avec une vitesse d'application de couche (B).

6. Dispositif selon l'une quelconque des revendications précédentes, **caractérisé en ce que** lors du mouvement d'évitement, l'élément de revêtement (11) peut être transféré dans une position non parallèle par rapport au plan de couche de la couche de poudre appliquée.

7. Dispositif selon l'une quelconque des revendications précédentes, **caractérisé en ce que** le mouvement de retour-d'évitement (A, R, Z) comprend un mouvement pivotant en hauteur de l'élément de revêtement (11).

8. Dispositif selon l'une quelconque des revendications précédentes, **caractérisé en ce que** l'élément de revêtement (11) est relevé du plan de construction pour retourner dans la position de départ de revêtement à la fin de l'opération de revêtement pour une couche et est guidé au-dessus d'un ensemble de scanner (17) du dispositif d'exposition pour revenir dans la position de départ de revêtement.

9. Dispositif selon l'une quelconque des revendications précédentes, **caractérisé en ce que** l'élément de revêtement est soumis dans le cadre du mouvement de retour-d'évitement (A, R, Z) à l'action d'un dispositif de nettoyage (50).

10. Dispositif selon l'une quelconque des revendications précédentes, **caractérisé en ce que** l'élément de revêtement (11) peut être remplacé dans le cadre du mouvement de retour-d'évitement (A, R, Z) par un changeur d'élément de revêtement (51).

11. Dispositif selon l'une quelconque des revendications précédentes, **caractérisé en ce qu'**au moins un élément de capteur servant à la mesure de caustique de la qualité du rayon laser est disposé au niveau d'une fixation ou d'un guidage de l'élément de revêtement (11), qui peut être guidé lors d'une opération de revêtement (B) ou en lieu et place d'une opération de revêtement par-dessus la zone à revêtir d'un secteur de construction.

12. Dispositif selon la revendication 11, **caractérisé en ce que** le dispositif de changement d'élément de revêtement comprend un magasin de rechange, dans lequel se tiennent à disposition une multitude d'éléments de revêtement identiques ou différents et/ou un élément de capteur (52) servant à la mesure de caustique.

13. Dispositif selon l'une quelconque des revendications précédentes, **caractérisé en ce que** l'élément de revêtement (11) est sorti par pivotement de la surface à revêtir du secteur de construction lors du mouvement d'évitement (A) et, dans ladite position sortie par pivotement, est ramené dans la position de départ de revêtement et, dans la position de départ de revêtement, est rentré par pivotement dans la position de revêtement.

14. Procédé servant à fabriquer des objets tridimensionnels par solidification successive de couches d'un matériau de construction (9) pouvant être solidifié au moyen d'un rayonnement au niveau d'emplacements correspondant à la section transversale respective de l'objet, avec des caractéristiques suivantes :
- de prévision d'un boîtier (2) avec un contenant de construction (6) disposé dans celui-ci ;
- de prévision d'un dispositif d'irradiation (16, 17) servant à irradier des couches du matériau de construction (9) au niveau d'emplacements correspondant à la section transversale respective de l'objet ;
- de prévision d'un dispositif d'application (12) servant à appliquer les couches du matériau de construction (9) sur un dispositif de support (7) dans le contenant de construction (6) ou une couche formée au préalable ;
-- de prévision d'un moyen de dosage (5) servant à amener le matériau de construction (9), dans lequel le dispositif d'application (12) comprend un élément de revêtement (11), qui répartit le matériau de construction (9) amené par le moyen de dosage (5) en tant que couche fine dans une zone d'application le long d'un mouvement d'application (B) linéaire, **caractérisé par** la mise en mouvement d'évitement (A) de l'élément de revêtement de telle manière que l'élément de revêtement ne croise pas, lors de son retour (A, R, Z) dans une position de départ de revêtement (B1), une zone spatiale de rayon de scanner (30) entre le dispositif d'irradiation (17) et une couche appliquée, dans lequel
- l'élément de revêtement (11) est monté de manière à pouvoir pivoter d'un côté autour d'au moins un axe, et/ou
le mouvement de retour-d'évitement (A, R, Z) comprend un mouvement pivotant, dans lequel l'élément de revêtement (11) est guidé à l'extérieur de la surface de construction à exposer en rotation autour d'un axe de pivotement.

15. Procédé selon la revendication 14, **caractérisé en ce que** pour revenir dans la position de départ de revêtement (B1), l'élément de revêtement (11) est soit rabattu vers le haut soit éloigné par un rabattement latéral soit est sorti latéralement ou sorti par pivotement de la zone spatiale de rayon de scanner (30).
